# EUROPÄISCHE PATENTANMELDUNG

(11) **EP 0 842 829 A1**
(43) Veröffentlichungstag der Anmeldung: **20.05.1998**
(21) Anmeldenummer: 97119663.9
(22) Anmeldetag: 10.11.1997
(51) Int. Cl.: B60R 21/32, B60R 22/46

(54) **Auslösevorrichtung für Insassenrückhaltesysteme in einem Fahrzeug**

(30) Priorität: 19.11.1996 DE 19647660
(71) Anmelder: Daimler-Benz Aktiengesellschaft, 70546 Stuttgart (DE)
(72) Erfinder: Bullinger, Wilfried, 70825 Krontal-Münchingen (DE); Eberle, Walter, 73264 Hochdorf (DE); Hartlieb, Markus, 72141 Walddorfhäslach (DE); Meyer, Michael, 71155 Altdorf (DE); Müller, Manfred, 73779 Deizisau (DE); Zerrweck, Frank, 70376 Stuttgart (DE)

(57) **Zusammenfassung**

Die Erfindung betrifft eine Auslösevorrichtung für Insassenrückhaltesysteme in einem Fahrzeug (1) umfassend ein Auslösesteuergerät (2), dessen Auslösebereitschaft in Abhängigkeit von kollisionsrelevanten Parametern von einer Kollisionsparametererfassung (4) beeinflußbar ist.

Erfindungsgemäß umfaßt die Kollisionsparametererfassung (4) eine Objekterfassung (5), welche in einem Nahbereich um das Fahrzeug ein Kollisionsobjekt (6) noch vor einem Zusammenstoß erfassen und zumindest eine Relativgeschwindigkeit (Vr) ermitteln kann, und einen Signalgenerator (8), welcher immer dann, wenn ein Kollisionsobjekt erfaßt wird, ein von der ermittelten Relativgeschwindigkeit (Vr) abhängiges Kollisionsparametersignal (5) vorgibt.

Bei einer Weiterbildung zum verbesserten Schutz gegenüber Frontalcrashs ist vorgesehen, daß die Kollisionsparametererfassung zusätzlich die Eigengeschwindigkeit (Ve) des Fahrzeugs erfaßt und immer dann, wenn kein Kollisionsobjekt (6) erkannt wird, der Signalgenerator (8) ein von der Eigengeschwindigkeit (Ve) beeinflußtes Kollisionsparametersignal (5) vorgibt.

## Beschreibung

Die Erfindung betrifft eine Auslösevorrichtung für Insassenrückhaltesysteme in einem Fahrzeug zum Schutz von Fahrzeuginsassen bei einer Kollision mit den Merkmalen des Oberbegriffs des Patentanspruchs 1.

Eine gattungsgemäße Auslösevorrichtungen geht aus der gattungsbildenden DE 43 24 753 A1 als bekannt hervor. Die bekannte Auslösevorrichtung umfaßt ein Auslösesteuergerät, insbesondere zur Auslösung eines Seitenairbags, welches bei Überschreiten einer Auslöseschwelle durch ein aus dem Beschleunigungssignal eines Querbeschleunigungssensors aufbereiteten Verzögerungssignals einen Seitenairbag auslöst. Die Auslösevorrichtung umfaßt weiterhin eine Kollisionsparametererfassung in der Ausbildung eines Deformationssensors, der hinter der Außenhaut im Seitenbereich des Fahrzeugs angeordnet ist und bei einem Aufprall die Deformationsgeschwindigkeit der Außenhaut erfaßt. Bei einer kritischen Deformation wird ein Steuersignal zur Beeinflussung der Auslöseschwelle in der Weise abgegeben, daß die Absenkung der Auslöseschwelle umso größer ist, je größer die ermittelte Deformationsgeschwindigkeit ist. Alternativ oder ergänzend kann die Auslösebereitschaft auch dadurch beeinflußt werden, daß die Aufbereitung des Verzögerungssignals in Abhängigkeit der Deformationsgeschwindigkeit verändert wird. Die bekannte Auslösevorrichtung ermöglicht ein schnelles und sicheres Ansprechen des Auslösegerätes bei einem für einen Insassen gefährlichen Seitenaufprall und zugleich Sicherheit gegen Fehlauslösung in einem ungefährlichen Kollisionsfall. Als nachteilig an der bekannten Auslösevorrichtung kann erachtet werden, daß sich die flächendeckende Überwachung einer Fahrzeugseite mittels eines Deformationssensors, nur unter großem Aufwand bewerkstelligen läßt.

Daneben sind eine Reihe von Vorrichtungen bekannt, bei denen sich die Auslöseentscheidung zur Auslösung von Rückhalteeinrichtungen nicht auf die Bewertung eines Beschleunigungssignals eines Beschleunigungssensors stützt, sondern bei denen versucht wird, z.B. mittels Annäherungssensoren noch vor einem Aufprall alle relevanten Kollisionsparameter wie Abstand und Relativgeschwindigkeit zu erfassen, einen unvermeidlichen Aufprall zu erkennen und entsprechende Sicherheitseinrichtung noch vor dem Aufprall zu aktivieren. Durch eine frühe Auslösung steht einem Rückhaltesystem wie einem Airbag mehr Zeit zur Entfaltung zur Verfügung, wodurch ein sanfterer Aufprallschutz für Insassen ermöglicht wird. Diese Art der vorausschauenden Auslösung ist in Fachkreisen unter dem Namen 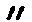 Precrash"-Auslösung bekannt. Im Vordergrund steht dabei auch die Möglichkeit noch vor einem drohenden Aufprall, Antikollisionsstrategien wie automatische Notbrems- oder Ausweichmanöver einzuleiten, um den Aufprall zu vermeiden.

Dieser allgemeine Gedanke ist in der DE 36 37 165 A1 im Detail ausgeführt: Als Sensorsystem zur Ortung eines Kollisionsobjektes wird mindestens ein vorzugsweise in Fahrtrichtung elektromagnetische Signale ausstrahlender Sender und mindestens ein Echosignale nach Reflexion am Objekt auffangender Empfänger verwendet. Die Relativgeschwindigkeit zum Kollisionsobjekt kann unmittelbar aus der Doppler-Frequenzverschiebung eines Radar- oder Infrarotsignals ermittelt werden. Für weitere Details und zum weiteren Stand der Technik zu 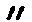 Precrash"-Auslösungen mit Radar-Verfahren und Radar-Doppler-Verfahren wird verwiesen auf: DE 22 24 842 A1, DE 44 24 878 A1, DE 44 26 090 A1, WO 86/05149, EP 210 079 A2, US 4 104 632 und US 3 684 309.

Radar-Doppler-Verfahren sind auch zur Straßenzustandserkennung geeignet. Aus der DE 44 29 419 A1 ist ein Verfahren bekannt, bei dem das Leistungsdichtespektrum des Bodenechos eines Radar-Dopplersystems ausgewertet wird.

Aus der bereits genannten DE 36 37 165 A1 ist bekannt, Video-Kamerasysteme mit nachgeschalteter Bildauswertung anstelle von Radar- oder Infrarotsensoren einzusetzen. Mittels Bildverarbeitung werden Entfernung, Annäherungsgeschwindigkeit, Größe und Form eines herannahenden Objektes bestimmt, mit abgespeicherten Daten oder Mustern verglichen und der Gefährlichkeitsgrad beurteilt. Bei Überschreitung einer vorgegebenen Gefährlichkeitsschwelle wird ein Airbag ausgelöst. Weitere technische Details für ein System zur Überwachung des fahrzeugexternen Zustands unter Verwendung von Video-Kameras gehen auch aus der DE 43 08 776 A1 hervor.

Im Zusammenhang mit 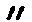 Precrash"-Auslösung sind auch Systeme bekannt, bei denen im Nahbereich zwischen zwei auf Kollisionskurs sich befindenden Fahrzeugen über eine drahtlose Kommunikationsstrecke kollisionsrelevante Daten wie Masse, Geschwindigkeit und Richtung ausgetauscht werden.

Die bekannten Auslösevorrichtungen zur 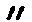 Precrash"-Auslösung umfassen Einrichtungen zur Objekterfassung, welche es ermöglichen, ein entgegenkommendes Fahrzeug sicher zu erfassen und dessen Relativgeschwindigkeit zu ermitteln. Der Gefährlichkeitsgrad einer drohenden Kollision hängt jedoch entscheidend von der Masse des Kollisionsobjektes ab. Zumindest mit den kostengünstigeren Verfahren, welche durch Radar- oder Infrarotsignale das Kollisionsobjekt erfassen, kann diese wichtige Information nicht gewonnen und der Auslöseentscheidung daher nicht zugrundegelegt werden. Ein auf der Fahrbahn liegender, großer Pappkarton wird daher möglicherweise gleichermaßen bewertet wie ein stehendes Fahrzeug und führt zu einer entsprechenden, hier jedoch unangemessenen Reaktion.

Damit die bekannten Systeme zur 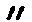 Precrash"-Auslösung einen bestmöglichen Schutz auch gegenüber Kollision mit unbewegten Kollisionsobjekten wie Pfeilern oder Bäumen bieten können, müssen auch diese von der Objekterfassung erkannt werden. Dies erfordert hinsichtlich der Sensierung eine empfindliche und räumlich lückenlose Auslegung des Systems, was andererseits die Gefahr von Fehlauslösungen beispielsweise durch ein entgegenkommendes, in geringer Distanz vorbeifahrendes Fahrzeug wiederum erhöht.

Aufgabe der Erfindung ist es, eine gattungsgemäße Auslösevorrichtung bereitzustellen, mit welcher bei möglichst geringem Aufwand eine möglichst frühzeitige Auslöseentscheidung getroffen werden kann, aber Fehlauslösungen weitgehend ausgeschlossen werden können.

Diese Aufgabe wird durch die Merkmale des Anspruchs 1 gelöst, wobei die Merkmale der Unteransprüche vorteilhafte Aus- und Weiterbildungen kennzeichnen.

Bei der erfindungsgemäßen Vorrichtung wird eine Kollisionsparametererfassung eingesetzt, welche in einem Nahbereich um das Fahrzeug ein Kollisionsobjekt noch vor einem Zusammenstoß erfassen und zumindest dessen Relativgeschwindigkeit zum Fahrzeug ermitteln kann und eine Bewertung durchführt. Wenn ein Kollisionsobjekt erfaßt wurde, gibt die Kollisionsparametererfassung ein von der Relativgeschwindigkeit abhängiges Kollisionsparametersignal zur Beeinflussung der Auslösebereitschaft ab. In vorteilhafter Weise erfolgt die Beeinflussung derart, daß die Auslösebereitschaft mit zunehmender ermittelter Relativgeschwindigkeit zunimmt, insbesondere indem die Auslöseschwelle zumindest in einem unteren Geschwindigkeitsbereich monoton mit zunehmender Relativgeschwindigkeit abnimmt. Mit der Charakterisierung 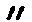 nimmt monoton ab" sollen auch die Grenzfälle umfaßt sein, bei denen die Auslöseschwelle in bestimmten Bereichen unveränderlich ist.

Alternativ oder ergänzend kann eine Beeinflussung der Auslösebereitschaft durch Beeinflussung der Aufbereitung des Verzögerungssignals aus dem Beschleunigungssignal erfolgen, beispielsweise durch Beeinflussung eines Integrationsgewichtes, wie es in der bereits genannten DE 43 24 753 A1 beschrieben ist. Der Einfachheit halber wird im Folgenden die erfindungsgemäße Auslösevorrichtung vor allem am Beispiel einer Beeinflussung über die Auslöseschwelle beschrieben.

Für die Objekterfassung sind z.B. alle eingangs in Zusammenhang mit 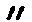 Precrash"-Auslösungen erwähnten Systeme, welche eine Relativgeschwindigkeitsbestimmung vorsehen, denkbar. Dazu zählen jede Art von Entfernungs- oder Dopplermeßsysteme, die auf der Auswertung von Radar-, Infrarot- oder Ultraschallwellen beruhen sowie die erwähnten bildverarbeitenden Systeme und die Nahbereichs-Kommunikationssysteme.

Je nachdem ob, wie beispielsweise in der WO 86/05149 ausgeführt, die Objekterfassung einen Sensierungsbereich vor, hinter oder an der Seite des Fahrzeugs überwacht, kann mit der erfindungsgemäßen Auslösevorrichtung ein Schutz gegenüber Frontal-, Heck beziehungsweise Seitenaufprall bereitgestellt werden.

Vorteile der Erfindung gegenüber dem Stand der Technik bestehen darin, daß bereits vor dem Aufprall das Auslösesteuergerät auf einen bevorstehenden Aufprall vorbereitet wird, indem bei einer hohen gemessenen Relativgeschwindigkeit z.B. durch eine niedrige Auslöseschwelle eine schnelle Auslösung ermöglicht wird. Anders als eine an der Außenhaut des Fahrzeugs erfaßte Deformationsgeschwindigkeit, welche von vielen anderen Faktoren abhängt und lokal variiert, ist die Relativgeschwindigkeit eine dem Kollisionsobjekt allein zugeordnete, wohldefinierte physikalische Größe, was die Abstimmung der Auslösevorrichtung vereinfacht.

Da erfindungsgemäß das Überschreiten der Auslöseschwelle durch ein aus einem Beschleunigungssignal abgeleiteten Verzögerungssignal notwendiges Kriterium für die Auslöseentscheidung ist, wird nicht nur die Relativgeschwindigkeit sondern auch die Masse des Kollisionsobjektes in die Auslöseentscheidung einbezogen. Damit wird erreicht, daß ein leichtes Kollisionsobjekt, welches trotz hoher Relativgeschwindigkeit aufgrund seiner geringen Masse keine Gefährdung darstellt, nie zu einer Auslösung führen kann.

Ein weiterer Vorteil besteht darin, daß durch die Einbeziehung der Relativgeschwindigkeit in die Auslöseentscheidung ein Aufprall mit geringer Relativgeschwindigkeit und daher geringem Gefährdungsgrad sofort richtig bewertet wird, indem z.B. durch Anhebung der Auslöseschwelle eine Auslösung unterdrückt wird. Dies ist bei Frontalcrashs von besonderer Bedeutung, weil sich das Beschleunigungssignal beim 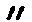 harten" Aufprall gegen eine Wand mit niedriger Geschwindigkeit in seinem anfänglichen Verlauf oftmals wenig unterscheidet von dem Beschleunigungssignal eines 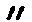 weichen" Aufpralles bei einer mittleren Relativgeschwindigkeit von ca 55 km/h gegen eine deformierbare Barriere. Ein solcher Aufprall, bei dem die Barriere nach Verbrauch der Deformationszone auf Block geht, muß aufgrund seines höheren Gefährdungsgrades für Insassen anders bewertet werden.

Eine Weiterbildung bezieht sich auf den Fall, daß die von der Kollisionsparametererfassung beeinflußte Auslöseschwelle eine Auslöseschwelle für ein Verzögerungssignal ist, welches aus einem die Fahrzeugslängsbeschleunigung charakterisierenden Beschleunigungssignal aufbereitet ist, und die von der Objekterfassung ermittelbare Relativgeschwindigkeit die Längsrelativgeschwindigkeit, das heißt, die Komponente der Relativgeschwindigkeit in Fahrzeuglängsrichtung darstellt. In vorteilhafter Weise wird die Eigengeschwindigkeit in die Beeinflussung der Auslösebereitschaft einbezogen. In einer besonderen Ausbildung wird immer dann, wenn kein Kollisionsobjekt erkannt wird, die Auslöseschwelle in Abhängigkeit von der Eigengeschwindigkeit so beeinflußt, daß die Auslöseschwelle zumindest in einem unteren Geschwindigkeitsbereich monoton mit zunehmender Eigengeschwindigkeit abnimmt.

Diese Ausgestaltung bietet den großen Vorteil, daß die Beeinflussung der Auslösebereitschaft, insbesondere die Abhängigkeit der Auslöseschwelle von der Eigengeschwindigkeit so gewählt werden kann, daß gegenüber ruhenden Kollisionsobjekten, bei denen im Kollisionsfall die Längsrelativgeschwindigkeit immer gleich der Eigengeschwindigkeit des Fahrzeugs ist, sich ein optimales Auslöseverhalten ergibt. Ein Aufprall gegen ein ruhendes Kollisionsobjekt wird also immer richtig bewertet, auch wenn das Kollisionsobjekt durch die Objekterfassung nicht erfaßt wurde.

Dies gestattet es wiederum, die Auslegung der Objekterfassung auf die Erfassung von nichtruhenden Verkehrsteilnehmern wie Kraftfahrzeugen und Motorrädern zu beschränken, da ruhende oder sich mit geringer Geschwindigkeit bewegende Kollisionsobjekte bereits richtig bewertet werden. Damit kann die Objekterfassung hinsichtlich der Sensierung von Kollisionsobjekt weniger empfindlich und räumlich konzentrierter ausgelegt werden. Dies reduziert den technischen Aufwand und vermindert die Gefahr von Fehlauslösungen.

Weitere Einzelheiten und vorteilhafte Weiterbildungen der erfindungsgemäßen Auslösevorrichtung ergeben sich aus weiteren Unteransprüchen in Verbindung mit der folgenden Beschreibung.

Ausführungsbeispiele der Erfindung sind in der Zeichnung dargestellt und werden nachstehend erläutert. Es zeigen:
- Fig. 1: ein Ausführungsbeispiel der erfindungsgemäßen Auslösevorrichtung,
- Fig. 2: mehrere Ausführungsbeispiele für die Beeinflussung der Auslöseschwelle in Abhängigkeit der ermittelten Relativgeschwindigkeit vₗᵣ und der Eigengeschwindigkeit vₑ.

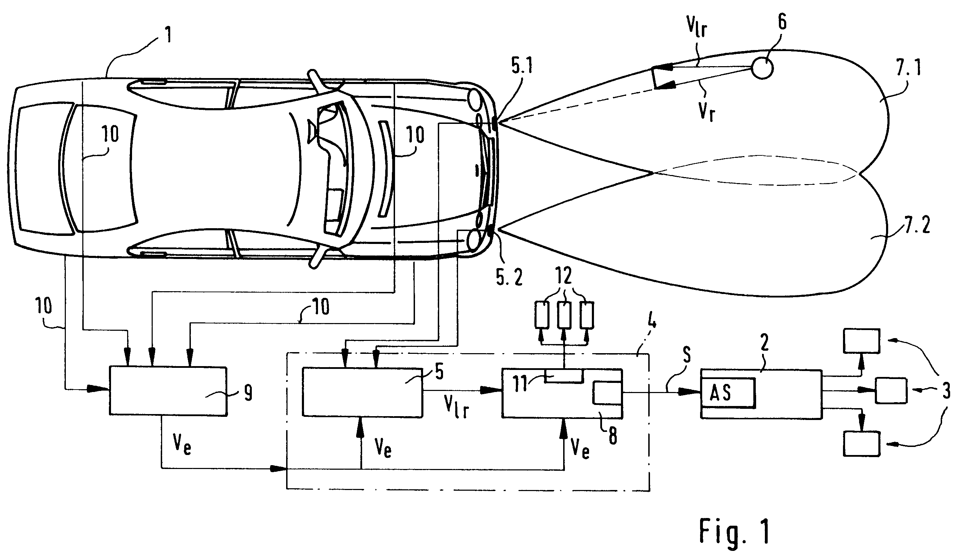

In der Fig. 1 ist in Aufsicht ein Fahrzeug 1 mit der erfindungsgemäßen Auslösevorrichtung umfassend ein Auslösesteuergerät 2 für Insassenrückhaltesysteme 3, z.B. Airbags oder Gurtstraffer dargestellt. Das dargestellte Ausführungsbeispiel beschränkt sich auf den Fall, daß die von der Kollisionsparametererfassung 4 beeinflußte Auslöseschwelle AS eine Auslöseschwelle für ein Verzögerungssignal ist, welches aus einem die Fahrzeuglängsbeschleunigung charakterisierenden Beschleunigungssignal eines Beschleunigungssensors (nicht dargestellt) aufbereitet ist. Bei Überschreiten der Auslöseschwelle AS löst das Auslösesteuergerät 2 mindestens eines der zum Schutz gegenüber Frontalaufprall geeigneten Rückhaltesysteme 3, z.B. Gurtstraffer oder Frontal-Airbag aus.

Erfindungsgemäß umfaßt die Kollisionsparametererfassung 4 eine Objekterfassung 5, 5.1, 5.2, welche in einem Nahbereich um das Fahrzeug 1 ein Kollisionsobjekt 6 - in Fig. 1 ist dieses ein seitlich versetzter Pfahl - noch vor einem Zusammenstoß erfassen und eine Relativgeschwindigkeit zum Kollisionsobjekt 6 ermitteln kann. Im dargestellten Ausführungsbeispiel umfaßt die Objekterfassung 5, 5.1, 5.2 zwei an sich bekannte Doppler-Radar-Meßeinrichtungen 5.1, 5.2, welche in Sensierungsbereichen 7.1, 7.2 vor dem Fahrzeug ein eindringendes Kollisionsobjekt erfassen und dessen Relativgeschwindigkeit messen können. Die erste Meßeinrichtung 5.1 erfaßt einen Sensierungsbereich 7.1 in Form einer in Fahrzeuglängsrichtung ausgerichteten schmalen Radarkeule, deren Hauptrichtung parallel zur Fahrzeuglängsachse in der fahrerseitige Hälfte des Fahrzeugs verläuft. Die zweite Meßeinrichtung 5.2 erfaßt einen Sensierungsbereich 7.2 in Form einer ebenfalls in Fahrzeuglängsrichtung ausgerichteten schmalen Radarkeule, deren Hauptrichtung parallel zur Fahrzeuglängsachse aber in der beifahrerseitigen Hälfte des Fahrzeugs verläuft. Die Meßeinrichtungen 5.1, 5.2 erfassen somit alle Fahrzeuge und ruhende Objekte, die ohne allzu großen seitlichen Versatz in den jeweiligen Sensierungsbereich 7.1, 7.2 eindringen.

Mit den in Fahrzeuglängsrichtung ausgerichteten schmalen Radarkeulen wird erreicht, daß die von einer der oder gleichzeitig von beiden der Meßeinrichtungen 5.1, 5.2 gemessenen Relativgeschwindigkeit vᵣ der Längsrelativgeschwindigkeit vₗᵣ eines Kollisionsobjektes 6 nahekommt. Die Längsrelativgeschwindigkeit vₗᵣ ist die interessierende Größe, wenn die Auslösebereitschaft bei einer auf die Fahrzeuglängsbeschleunigung bezogene Auslöseschwelle beeinflußt werden soll. Gleiches gilt bei einem Schrägaufprall mit einem anderen kollidierenden Fahrzeug, auch hier interessiert nur die Komponente der Relativgeschwindigkeit in Fahrzeuglängsrichtung. Geeignete Doppler-Radar-Meßeinrichtungen 5.1, 5.2 weisen einen Sensierungsbereich mit einer Reichweitenbegrenzung auf 1-2 m und eine Winkelbegrenzung von 20°-50° horizontal und ungefähr 40° vertikal bei -3dB Punkten auf.

Ein auf Mikrowellen im GHz-Bereich basierendes Doppler-Radar-Meßsystem zur Erfassung der Relativgeschwindigkeit hat den Vorteil, daß die Messung durch die äußere Form des Kollisionsobjektes wenig beeinflußt wird, im Gegensatz zu Meßverfahren, die auf Laufzeitmessungen eines Echopulses basieren. Ein weiterer Vorteil ist, daß ein Mikrowellensignal durch Nebel, Regen, Schnee oder Staub weniger beeinflußt wird, als ein Infrarotsignal, welches von den optischen Eigenschaften der Atmosphäre stark abhängt.

Die Kollisionsparametererfassung 4 umfaßt weiterhin einen Signalgenerator 8, welcher von der Objekterfassung 5 bei Erfassung eines Kollisionsobjektes mit einem der ermittelten Relativgeschwindigkeit, im Ausführungsbeispiel ist es die Längsrelativgeschwindigkeit vₗᵣ, entsprechenden Signal angesteuert wird. Der Signalgenerator 8 gibt immer dann, wenn ein Kollisionsobjekt erfaßt wird, ein von der ermittelten Relativgeschwindigkeit vₗᵣ abhängiges Kollisionsparametersignal S in der Weise dem Auslösesteuergerät 2 vor, daß die Auslöseschwelle AS zumindest in einem unteren Bereich für die Relativgeschwindigkeit monoton mit zunehmender ermittelter Relativgeschwindigkeit vₗᵣ fällt. Entsprechend nimmt die Auslösebereitschaft mit zunehmender Relativgeschwindigkeit zu. Gleich Wirkung ist auch durch eine Beeinflussung der Aufbereitung des Verzögerungssignals erzielbar, wie bereits erwähnt.

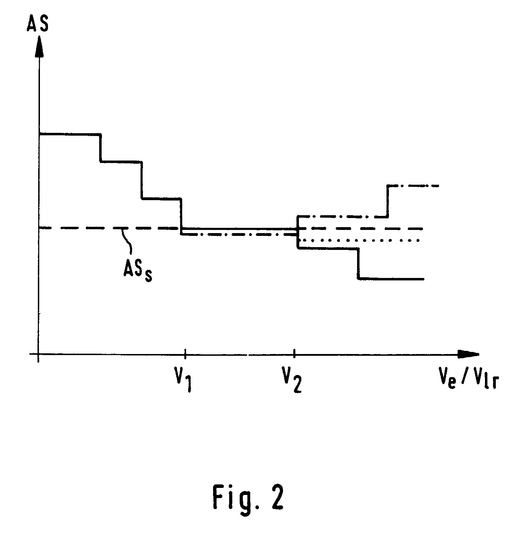

Die Fig. 2 zeigt als durchgezogene Linie einen typischen monoton abfallenden Verlauf für die Beeinflussung der Auslöseschwelle AS in Abhängigkeit der ermittelten Relativgeschwindigkeit vₗᵣ. Der stufenweise abfallende Verlauf ermöglicht eine einfache Programmierung der funktionalen Abhängigkeit, ist jedoch nicht zwingend, mit entsprechendem Mehraufwand ist ebenso ein stetiger Kennlinienverlauf ohne Sprungstellen realisierbar. Als gestrichelte Linie ist eine Standard-Auslöseschwelle ASₛ eingezeichnet, welche der Auslöseschwelle in bekannten Auslösegeräten entspricht. Die Standard-Auslöseschwelle in bekannten Auslösegeräten ist so gewählt, daß a) ausreichend Sicherheit vor Fehlauslösungen im Standard-Fahrbetrieb auch beim Überfahren von Fahrbahnunebenheiten gegeben und b) ein optimales Auslöseverhalten zumindest bei mittlere Kollisionsgeschwindigkeiten vₖ sichergestellt ist. Dabei umfaßt der Standard-Fahrbetrieb alle möglichen Fahrgeschwindigkeiten, während die mittleren Kollisionsgeschwindigkeiten vₖ in einem Bereich v₁<vₖ<v₂ liegen, welcher z.B. durch die Geschwindigkeitswerte v₁=30 km/h und v₂=60 km/h begrenzt ist und die üblichen Kollisionsgeschwindigkeiten bei Crashversuchen umfaßt.

In einer vorteilhaften Ausbildung ist die bei erfaßtem Kollisionsobjekt vorgegebene Auslöseschwelle gegenüber der Standard-Auslöseschwelle angehoben, wenn die ermittelte Längsrelativgeschwindigkeit vₗᵣ in einem unteren Geschwindigkeitsbereich, insbesondere unterhalb des Geschwindigkeitswertes v₁ liegt, wie in Fig. 2 die durchgezogene Linie zeigt. Damit wird eine Auslösung bei niedrigen Relativgeschwindigkeiten wirksam erschwert bis unterdrückt.

Alternativ oder in Kombination kann vorgesehen sein, daß wenn bei erfaßtem Kollisionsobjekt die Relativgeschwindigkeit vₗᵣ in einem oberen Geschwindigkeitsbereich, insbesondere oberhalb des Geschwindigkeitswertes v₂ liegt, die Auslöseschwelle gegenüber der Standard-Auslöseschwelle erniedrigt ist, wie in Fig. 2 dargestellt. Damit wird eine schnellere Auslösung bei hohen Relativgeschwindigkeiten erreicht.

Durch die in Fig. 2 dargestellte Ausgestaltung der Beeinflussung der Auslöseschwelle durch die Kollisionsparametererfassung 4 wird sichergestellt, daß auch wenn durch einen Defekt bedingt ein Kollisionsobjekt nicht erfaßt wurde, das Auslöseverhalten der erfindungsgemäßen Auslösevorrichtung nicht anders ist, als das der bekannten Auslösegeräte, welche die Standard-Auslöseschwelle verwenden.

In einer vorteilhaften Weiterbildung erfaßt die Kollisionsparametererfassung 4 zusätzlich die Eigengeschwindigkeit vₑ des Fahrzeugs. Ein entsprechendes Signal kann bei vielen Fahrzeugen über CAN-BUS eingespeist werden. Eine Eigengeschwindigkeitserfassung 9, wie sie bei vielen Fahrzeugen im ABS-Steuergerät bereits vorhanden ist, ermittelt die Eigengeschwindigkeit vₑ beispielsweise aus Raddrehzahlen 10, wie in Fig. 1 angedeutet. Erfindungsgemäß gibt nun die Kollisionsparametererfassung 4 über den Signalgenerator 8 immer dann, wenn kein Kollisionsobjekt erkannt wird, ein Kollisionsparametersignal S in der Weise ab, daß die Auslöseschwelle AS zumindest in einem unteren Geschwindigkeitsbereich monoton mit zunehmender Eigengeschwindigkeit vₑ fällt. Alternativ oder ergänzend wäre auch eine Ausführung denkbar, bei der die Auslösebereitschaft, wie bereits erwähnt, über die Aufbereitung des Verzögerungssignals beeinflußbar ist.

Allgemein ist die Abhängigkeit der Auslöseschwelle von der Eigengeschwindigkeit so zu wählen, daß gegenüber ruhenden Kollisionsobjekten, bei denen im Kollisionsfall die Längsrelativgeschwindigkeit vₗᵣ immer gleich der Eigengeschwindigkeit vₑ des Fahrzeugs ist, sich ein optimales Auslöseverhalten ergibt. Ein Aufprall gegen ein ruhendes Kollisionsobjekt wird dann immer richtig bewertet, auch wenn das Kollisionsobjekt durch die Objekterfassung 5 nicht erfaßt wurde.

Die Beeinflussung der Auslöseschwelle AS in Abhängigkeit von der Eigengeschwindigkeit vₑ bezogen auf die Standard-Auslöseschwelle ASₛ, wie sie in Fig. 2 gestrichelt dargestellt ist, erfolgt in vorteilhafter Weise derart, daß die Auslöseschwelle AS angehoben ist, wenn bei nicht erfaßtem Kollisionsobjekt die Eigengeschwindigkeit vₑ in einem unteren Geschwindigkeitsbereich, insbesondere unterhalb des Geschwindigkeitswertes v₁ liegt. Insbesondere kann in diesem unteren Bereich, die Beeinflussung in der gleichen Weise erfolgen, wie bei erfaßtem Kollisionsobjekt durch die ermittelte Relativgeschwindigkeit vₗᵣ, wie sie in Fig. 2 mit der durchgezogene Linie dargestellt ist.

Liegt die Eigengeschwindigkeit vₑ in einem mittleren Geschwindigkeitsbereich, insbesondere v₁<vₑ<v₂, so kann bei nicht erfaßtem Kollisionsobjekt die Beeinflussung der Auslöseschwelle AS in der Weise erfolgen, daß der Wert der Standard-Ausschwelle ASₛ (gestrichelte Linie) angenommen wird. In einem oberen Geschwindigkeitsbereich, insbesondere vₑ>v₂ kann dieser Wert beibehalten (gestrichelte Linie) oder abgesenkt (punktierte Linie) werden. Begrenzender Faktor bei einer Absenkung gegenüber der Standard-Auslöseschwelle ASₛ ist bei hohen Fahrgeschwindigkeiten die Sicherheit gegenüber Fehlauslösungen.

Alternativ kann einem mittleren Geschwindigkeitsbereich, insbesondere v₁<vₑ<v₂, ein unter der Standard-Auslöseschwelle liegender Wert, strichpunktiert dargestellt, vorgegeben werden. Ein darunter liegender Wert und damit eine erhöhte Empfindlichkeit kann dann gewählt werden, wenn dem Erfordernis der Sicherheit gegenüber einer Fehlauslösung bei hohen Fahrgeschwindigkeiten vₑ>v₂ durch eine Anhebung der Auslöseschwelle in diesem hohen Geschwindigkeitsbereich begegnet werden kann, wie dies in Fig. 2 mit der strichpunktierten Linie dargestellt ist.

Da durch die erfindungsgemäße Beeinflussung der Auslösebereitschaft oder Auslöseschwelle durch die Eigengeschwindigkeit vₑ ruhende oder sich mit geringer Geschwindigkeit bewegende Kollisionsobjekte bereits richtig bewertet werden, reicht es aus, die Objekterfassung 5 auf die Erfassung von nichtruhenden Verkehrsteilnehmern wie Kraftfahrzeugen und Motorrädern zu beschränken. Auf eine den gesamten Frontbereich lückenlos abdeckende Sensierung auch von kleineren ruhenden Kollisionsobjekten wie Bäumen oder Pfählen kann verzichtet werden. Damit kann die Objekterfassung hinsichtlich der Sensierung des Kollisionsobjektes weniger empfindlich und räumlich konzentrierter ausgelegt werden, wie dies mit den engen Sensierungsbereichen 7.1, 7.2 in Fig. 1 bereits verwirklicht ist.

Kleinere und am Rande des Sensierungsbereiches einer Meßeinrichtung auftreffende Kollisionsobjekte, die ansonsten zu einer Fehlmessung der Längsrelativgeschwindigkeit führen, werden über die Meßeinrichtungen nicht erfaßt, sondern mit der vorgegebenen Eigengeschwindigkeit automatisch richtig bewertet. Da nur noch relativ große Kollisionsobjekte erkannt werden müssen, die eine relativ hohe Signalamplitude liefern, kann die Systemempfindlichkeit verringert werden, was wiederum eine geringere Falschalarmrate und damit größere Systemsicherheit zur Folge hat. Außerdem können die relevanten, von einem Kollisionsobjekt reflektierten Signale besser von dem stets vorhandenen Bodenecho unterschieden werden.

In Weiterführung des Gedankens, daß es ausreicht, nur bewegte Kollisionsobjekte wie Fahrzeuge oder Motorräder zuverlässig erkennen zu können, kann die in Fig. 1 dargestellte Objekterfassung 5 mit zwei Doppler-Radar-Meßeinrichtungen 5.1, 5.2 weiter vereinfacht werden. Berücksichtigt man, daß im statistischen Mittel aufgrund der geltenden Straßenverkehrsordnung die nichtruhenden Verkehrsteilnehmer überwiegend auf der Fahrerseite auftreten, kann erwogen werden, die Meßeinrichtung 5.2 auf der Beifahrerseite einfacher auszubilden oder ganz auf sie zu verzichten. Eine verbleibende Meßeinrichtung 5.1 erfaßt dann Kollisionsobjekte auf der Fahrerseite und mißt deren Relativgeschwindigkeit vᵣ, welche der interessierenden Längsrelativgeschwindigkeit vₗᵣ nahekommt, sofern der enge Sensierungsbereich 7.1 beibehalten wird. Der Verzicht auf den Sensierungsbereich 7.2 auf der Beifahrerseite stellt für die gefährlichen Kollisionen mit entgegenkommenden Fahrzeugen, in der Regel keine Einschränkung der Sicherheit dar, weil solche Kollisionen entweder mit voller Überdeckung oder mit teilweiser Überdeckung auf der Fahrerseite erfolgen (Offset-Crash) und somit immer in den Sensierungsbereich 7.1 auf der Fahrerseite fallen. Für einen angemessen Schutz auch vor Kollisionen auf der Beifahrerseite sollte die Auslöseschwelle AS bei nicht erfaßtem Kollisionsobjekt und niedriger Eigengeschwindigkeit vₑ nicht zu sehr von der Standard-Auslöseschwelle ASₛ abweichen.

Bei einer Ausbildung der Objekterfassung mit nur einer einzigen Meßeinrichtung kann auch erwogen werden, den Sensierungsbereich so auszurichten und/oder aufzuweiten, daß dieser den gesamten Frontbereich, das heißt Fahrerseite und Beifahrerseite, überwacht. Insbesondere kann eine einzige, fahrerseitig oder mittig angeordnete Meßeinrichtung mit aufgeweitetem Sensierungsbereich vorgesehen sein. Eine Aufweitung des Sensierungsbereiches bedingt jedoch, daß die Abweichungen der gemessenen Relativgeschwindigkeit vᵣ von der interessierenden Längsrelativgeschwindigkeit vₗᵣ größer werden können, insbesondere für außermittig herannahende Kollisionsobjekte.

Insgesamt bietet die erfindungsgemäße Auslösevorrichtung hinsichtlich der Bewertung von Crash-Ereignissen gegenüber bekannten Auslösevorrichtungen mit Standard-Auslöseschwelle folgende Vorteile: Der Fall eines Crashs bei erkanntem Kollisionsobjekt wird besser behandelt, weil die Auslöseschwelle auf die tatsächliche Relativgeschwindigkeit eingestellt werden kann, was insbesondere bei hohen und bei niedrigen Relativgeschwindigkeiten zu wesentlichen Verbesserungen führt. Auch der Fall eines Crashs bei unerkanntem ruhendem Kollisionsobjekt wird besser behandelt, weil die Auslöseschwelle aufgrund ihrer Abhängigkeit von der Eigengeschwindigkeit so eingestellt ist, daß das Auslösesteuergerät auf einen Aufprall gegen ein ruhendes Kollisionsobjekt immer optimal vorbereitet ist. Insbesondere wird durch die Schwellenheraufsetzung bei niedriger Relativgeschwindigkeit beziehungsweise Eigengeschwindigkeit ein Verbesserung erreicht, indem eine unnötige Auslösung sicher vermieden wird.

In einer weiteren Weiterbildung kann eine Kollisionsbewertung 11 vorgesehen sein, welche bei erfaßtem Kollisionsobjekt die gemessenene Relativgeschwindigkeit vₗᵣ mit der Eigengeschwindigkeit vₑ vergleicht und damit auf die Bewegungsrichtung des Kollisionsobjektes schließt. Durch Vergleich kann erkannt werden, ob das erfaßte Kollisionsobjekte ruht, dem Fahrzeug 1 entgegenkommt oder vor diesem vorausfährt. Bei Doppler-Radar-Meßeinrichtungen, welche eine vorzeichenbehaftete Auswertung erlauben, kann noch weiter unterschieden werden, ob das vorausfahrende Fahrzeug langsamer ist und damit eine Kollision droht oder ob das vorausfahrende Fahrzeug schneller und damit ungefährlich ist. Die Kollisionsbewertung 11 erkennt und bewertet einen drohenden oder unvermeidlichen Aufprall mit einem Kollisionsobjekt und steuert der Bewertung entsprechend eine oder mehrere Precrash-Sicherheitseinrichtungen 12 an. Entsprechende Precrash-Sicherheitseinrichtungen 12 sind insbesondere aus dem eingangs zitierten Stand der Technik bekannt, insbesondere kann vorgesehen sein: a) Aktivierung von akustischen oder optischen Warneinrichtungen zur Warnung des Fahrers oder des Fahrers des Kollisionsfahrzeuges, b) Einleitung von automatischen Kollisionsvermeidungseingriffen, c) Auslösung von reversiblen Schutzsystemen wie reversible Gurtstraffer oder d) Einstellung der Kennlinie eines Fahrzeugvorbaus mit einstellbarer Kennlinie. Da die Kollisionsbewertung 11 die beiden Signale vᵣ und vₗᵣ auswertet, ist es vorteilhaft, die Kollisionsbewertung 11 in die Kollisionsparametererfassung 4, insbesondere in den Signalgenerator 8 zu integrieren.

In einer weiteren vorteilhaften Weiterbildung wird der Objekterfassung 5 die Eigengeschwindigkeit vₑ eingespeist. Dies ermöglicht einen Systemtest der Objekterfassung, insbesondere auch der Doppler-Radar-Meßeinrichtungen 5.1, 5.2 durch Vergleich der Eigengeschwindigkeit vₑ mit einer mittels der Meßeinrichtungen 5.1, 5.2 meßtechnisch ermittelten Relativgeschwindigkeit zu einem ruhenden Testobjekt. Das Testobjekt kann eine Testwand sein oder durch die Fahrbahn gebildet sein, indem das von der Fahrbahn zurückgeworfenen Bodenecho ausgewertet wird. Bei ein Systemtest kann z.B. überprüft werden, ob sich eine Veränderung der Eigengeschwindigkeit vₑ zumindest qualitativ in einer entsprechenden Verschiebung des charakteristischen Leistungsspektrums des Bodenechos wiederspiegelt.

Die Auswertung des Bodenechos bietet den Vorteil, daß die Funktionsfähigkeit und die Kalibrierung der Meßeinrichtungen 5.1, 5.2 im Fahrbetrieb laufend überprüft und/oder korrigiert werden kann. Zu diesem Zweck ist es vorteilhaft, daß die Antennencharakteristiken der Doppler-Radar-Meßeinrichtungen 5.1, 5.2 jeweils eine in Richtung der Fahrbahn weisende Nebenkeule aufweisen, so daß ein deutliches Bodenecho empfangen werden kann. Nähere Einzelheiten zur Beschaffenheit und Auswertung des Bodenechos sind der bereits genannten DE 44 29 419 A1 entnehmbar. In dieser Schrift wird das Bodenecho zur Ermittlung des Straßenzustandes herangezogen, wobei die Eigengeschwindigkeit vₑ zur Bildung eines von der Dopplerfrequenz abhängigen Leistungssprektrums herangezogen wird. In vorteilhafter Weise kann das Bodenecho sowohl zum Systemtest als auch zur Ermittlung des Straßenzustandes herangezogen werden. In dieser Ausführungsform ist es vorteilhaft, die Objekterfassung 5 mit dem Signalgenerator 8 in ein gemeinsames Gehäuse zu integrieren, da beide elektronischen Einheiten 5, 8 die Eigengeschwindigkeit vₑ als Eingabesignal benötigen. Es ist auch denkbar, die Kollisionsparametererfassung 4 mit allen ihren Komponenten in eine Baugruppe mit dem Auslösesteuergerät 2, insbesondere mit einem gemeinsamen Gehäuse zu integrieren.

Wird durch einen Systemtest ein Funktionsstörung der Objekterfassung 5 festgestellt, so wird beispielsweise durch Vorgabe eines entsprechenden Wertes für vₗᵣ ein Kollisionsparametersignal S in der Weise vorgegeben, daß die Auslöseschwelle AS auf die Standard-Auslöseschwelle ASₛ gesetzt wird.

Die beschriebenen Auslösevorrichtungen, bei denen das Kollisionsparametersignal S die Auslösebereitschaft beeinflußt, können auch dahingehend weitergebildet werden, daß das Kollisionsparametersignal S nicht nur die Auslöseentscheidung sondern auch das Auslöseverhalten nach einer Auslöseentscheidung beeinflußt. Insbesondere kann eine Auswahl zwischen den verschiedenen Insassenrückhaltesystemen 3 getroffen werden. Die Einbeziehung des Kollisionsparametersignals S erlaubt eine bessere Einschätzung der Unfallschwere und damit eine angepaßter Reaktion. Neben der Kollisionsgeschwindigkeit können gegenebenfalls mit der Objekterfassung 5 gewonnene Richtungsinformationen das Kollisionsobjekt betreffend einbezogen werden. Wenn ein Airbag mit mehrstufigem Gasgenerator unter den Insassenrückhaltesystemen 3 vorgesehen ist, kann dessen Auslöseverhalten, insbesondere die Entscheidung ob ein- oder zweistufig gezündet wird und/oder die Auslösezeitpunkte zum Zünden der Gasgeneratoren, durch das Kollisionsparametersignal S mitbeeinflußt sein.

## Patentansprüche

1. Auslösevorrichtung für Insassenrückhaltesysteme in einem Fahrzeug zum Schutz von Fahrzeuginsassen bei einer Kollision umfassend ein Auslösesteuergerät,
- welches bei Überschreiten einer Auslöseschwelle durch ein aus einem Beschleunigungssignal eines Beschleunigungssensors aufbereiteten Verzögerungssignal mindestens ein Insassenrückhaltesystem auslöst und
- dessen Auslösebereitschaft in Abhängigkeit von kollisionsrelevanten Parametern von einer Kollisionsparametererfassung durch Vorgabe eines Kollisionsparametersignals beeinflußbar ist,
**dadurch gekennzeichnet,**
daß die Kollisionsparametererfassung (4) umfaßt
- eine Objekterfassung (5), welche in einem Nahbereich um das Fahrzeug (1) ein Kollisionsobjekt (6) noch vor einem Zusammenstoß erfassen und zumindest eine Relativgeschwindigkeit (vₗᵣ) zwischen Kollisionsobjekt (6) und Fahrzeug (1) ermitteln kann, und
- einen Signalgenerator (8), welcher von der Objekterfassung (5) ansteuerbar ist und welcher immer dann, wenn ein Kollisionsobjekt (6) erfaßt wird, ein von der ermittelten Relativgeschwindigkeit (vₗᵣ) abhängiges Kollisionsparametersignal (S) zur Beeinflussung der Auslösebereitschaft vorgibt.

2. Auslösevorrichtung nach Anspruch 1,
**dadurch gekennzeichnet,**
daß immer dann, wenn ein Kollisionsobjekt (6) erfaßt wird, das Kollisionsparametersignal (S) in der Weise vorgegeben wird, daß die Auslösebereitschaft zumindest in einem unteren Bereich für die Relativgeschwindigkeit (vₗᵣ) mit zunehmender ermittelter Relativgeschwindigkeit (vₗᵣ) zunimmt.

3. Auslösevorrichtung nach Anspruch 1 oder 2,
**dadurch gekennzeichnet,**
- daß das Verzögerungssignal aus einem die Fahrzeugslängsbeschleunigung charakterisierenden Beschleunigungssignal aufbereitet ist,
- daß die von der Objekterfassung (5) ermittelbare Relativgeschwindigkeit die Längsrelativgeschwindigkeit (vₗᵣ) darstellt,
- daß die Kollisionsparametererfassung (4) zusätzlich die Eigengeschwindigkeit (vₑ) des Fahrzeugs (1) erfassen kann und immer dann, wenn kein Kollisionsobjekt erkannt wird, der Signalgenerator (8) ein von der Eigengeschwindigkeit (vₑ) beeinflußtes Kollisionsparametersignal (S) zur Beeinflussung der Auslösebereitschaft vorgibt.

4. Auslösevorrichtung nach Anspruch 3,
**dadurch gekennzeichnet,**
daß immer dann, wenn kein Kollisionsobjekt erkannt wird, das Kollisionsparametersignal (S) in der Weise vorgegeben wird, daß die Auslösebereitschaft zumindest in einem unteren Bereich für die Eigengeschwindigkeit (vₑ) mit zunehmender Eigengeschwindigkeit (vₑ) zunimmt.

5. Auslösevorrichtung nach Anspruch 2 oder 4,
**dadurch gekennzeichnet,**
daß die Beeinflussung der Auslösebereitschaft durch Beeinflussung der Auslöseschwelle (AS) erfolgt, wobei eine Zunahme der Auslösebereitschaft durch Absenken der Auslöseschwelle (AS) erfolgt.

6. Auslösevorrichtung nach Anspruch 5,
**dadurch gekennzeichnet,**
daß
- bei einer durch die Längsrelativgeschwindigkeit (vₗᵣ) beeinflußte Auslöseschwelle (AS), diese mit zunehmenden Relativgeschwindigkeit (vₗᵣ) zumindest in einem unteren Geschwindigkeitsbereit monoton mit zunehmender Relativgeschwindigkeit (vₗᵣ) abnimmt, und
- bei einer durch die Eigengeschwindigkeit (vₑ) beeinflußten Auslöseschwelle (AS), diese mit zunehmender Eigengeschwindigkeit (vₑ) zumindest in einem unteren Geschwindigkeitsbereich monoton mit zunehmender Eigengeschwindigkeit (vₑ) fällt.

7. Auslösevorrichtung nach Anspruch 6,
**dadurch gekennzeichnet,**
daß bezogen auf eine Standard-Auslöseschwelle (ASₛ), welche im Standard-Fahrbetrieb ausreichend Sicherheit vor Fehlauslösungen und für mittlere Kollisionsgeschwindigkeiten v₁<vₖ<v₂ ein optimiertes Auslöseverhalten bietet, die Auslöseschwelle (AS) gegenüber der Standard-Auslöseschwelle (ASₛ) angehoben ist, wenn bei nicht erfaßtem Kollisionsobjekt die Eigengeschwindigkeit (vₑ) oder bei erfaßtem Kollisionsobjekt die Längsrelativgeschwindigkeit (vₗᵣ) in einem unteren Geschwindigkeitsbereich, insbesondere unterhalb des Geschwindigkeitswertes v₁ liegen.

8. Auslösevorrichtung nach Anspruch 6,
**dadurch gekennzeichnet,**
daß bezogen auf eine Standard-Auslöseschwelle (ASₛ), welche im Standard-Fahrbetrieb ausreichend Sicherheit vor Fehlauslösungen und für mittlere Kollisionsionsgeschwindigkeiten v₁<vₖ<v₂ ein optimiertes Auslöseverhalten bietet, die Auslöseschwelle (AS) gegenüber der Standard-Auslöseschwelle (ASₛ) erniedrigt oder unverändert ist, wenn bei erfaßtem Kollisionsobjekt die Längsrelativgeschwindigkeit (vₗᵣ) in einem oberen Geschwindigkeitsbereich, insbesondere oberhalb von v₂ liegt.

9. Auslösevorrichtung nach Anspruch 6,
**dadurch gekennzeichnet,**
daß ausgehend von einer Standard-Auslöseschwelle (ASₛ), welche im Standard-Fahrbetrieb ausreichend Sicherheit vor Fehlauslösungen und für mittlere Kollisionsgeschwindigkeiten v₁<vₖ<v₂ ein optimiertes Auslöseverhalten bietet, die Auslöseschwelle (AS) gegenüber dem Wert der Standard-Auslöseschwelle (ASₛ) unverändert oder erhöht ist, wenn bei nicht erfaßtem Kollisionsobjekt die Eigengeschwindigkeit (vₑ) oberhalb von v₂ liegt.

10. Auslösevorrichtung nach Anspruch 9,
**dadurch gekennzeichnet,**
daß die Auslöseschwelle (AS) gegenüber der Standard-Auslöseschwelle (ASₛ) unverändert oder erniedrigt ist, wenn bei nicht erfaßtem Kollisionsobjekt die Eigengeschwindigkeit (vₑ) in einem mittleren Geschwindigkeitsbereich, insbesondere v₁<vₑ<v₂, liegt.

11. Auslösevorrichtung nach einem der Ansprüche 3 bis 6,
**dadurch gekennzeichnet,**
daß die Beeinflussung der Auslösebereitschaft, insbesondere die Abhängigkeit der Auslöseschwelle (AS) von der Eigengeschwindigkeit (vₑ) so gewählt ist, daß gegenüber ruhenden Kollisionsobjekten sich ein optimales Auslöseverhalten ergibt.

12. Auslösevorrichtung nach Anspruch 11,
**dadurch gekennzeichnet,**
daß die Objekterfassung (5) sich auf die zuverlässige Erfassung von nichtruhenden Verkehrsteilnehmern wie Kraftfahrzeuge und Motorräder beschränkt.

13. Auslösevorrichtung nach Anspruch 3 oder 11,
**dadurch gekennzeichnet,**
daß die Objekterfassung (5, 5.1, 5.2) mindestens eine Doppler-Radar-Meßeinrichtung (5.1, 5.2), welche in einem Sensierungsbereichen (7.1, 7.2) vor dem Fahrzeug ein eindringendes Kollisionsobjekt erfassen und dessen Relativgeschwindigkeit messen kann.

14. Auslösevorrichtung nach Anspruch 13,
**dadurch gekennzeichnet,**
daß die mindestens eine Meßeinrichtung (5.1) einen Sensierungsbereich (7.1) in Form einer in Fahrzeuglängsrichtung ausgerichteten schmalen Radarkeule aufweist, deren Hauptrichtung parallel zur Fahrzeuglängsachse in der fahrerseitigen Hälfte des Fahrzeugs verläuft.

15. Auslösevorrichtung nach Anspruch 14,
**dadurch gekennzeichnet,**
daß eine zweite Meßeinrichtung (5.2) einen Sensierungsbereich (7.2) in Form einer ebenfalls in Fahrzeuglängsrichtung ausgerichteten Radarkeule aufweist, deren Hauptrichtung parallel zur Fahrzeuglängsachse aber in der beifahrerseitigen Hälfte des Fahrzeugs verläuft.

16. Auslösevorrichtung nach Anspruch 13,
**dadurch gekennzeichnet,**
daß eine einzige fahrerseitig oder mittig angeordnete Meßeinrichtung vorgesehen ist, deren Sensierungsbereich so ausgerichtet und/oder aufgeweitet ist, daß der gesamte Frontbereich überwachbar ist.

17. Auslösevorrichtung nach Anspruch 3,
**dadurch gekennzeichnet,**
daß eine Kollisionsbewertung (11) vorgesehen ist, welche bei erfaßtem Kollisionsobjekt (6) die gemessenene Relativgeschwindigkeit (vₗᵣ) mit der Eigengeschwindigkeit (vₑ) vergleicht und damit auf die Bewegungsrichtung des Kollisionsobjektes schließt.

18. Auslösevorrichtung nach Anspruch 17,
**dadurch gekennzeichnet,**
daß die Kollisionsbewertung (11) einen drohenden oder unvermeidlichen Aufprall mit einem Kollisionsobjekt erkennt und bewertet und eine oder mehrere Precrash-Sicherheitseinrichtungen (12) entsprechend der Bewertung ansteuert.

19. Auslösevorrichtung nach Anspruch 18,
**dadurch gekennzeichnet,**
daß die Kollisionsbewertung (11) in die Kollisionsparametererfassung (4) integriert, insbesondere mit dem Signalgenerator (8) in eine Baugruppe integriert ist.

20. Auslösevorrichtung nach Anspruch 3,
**dadurch gekennzeichnet,**
daß durch Vergleich der Eigengeschwindigkeit (vₑ) mit einer durch die Objekterfassung (5) ermittelten Relativgeschwindigkeit (vₗᵣ) zu einem ruhenden Testobjekt ein Systemtest durchführbar ist.

21. Auslösevorrichtung nach einem der Ansprüche 13, 14, 15, oder 16
**dadurch gekennzeichnet,**
daß ein Systemtest unter Auswertung der Eigengeschwindigkeit (vₑ) und des von der Fahrbahn zurückgeworfenen Bodenechos durchführbar ist.

22. Auslösevorrichtung nach Anspruch 21,
**dadurch gekennzeichnet,**
daß das Bodenecho auch zur Ermittlung des Straßenzustandes herangezogen wird.

23. Auslösevorrichtung nach Anspruch 21,
**dadurch gekennzeichnet,**
daß die Antennencharakteristiken der mindestens einen Doppler-Radar-Meßeinrichtung (5.1, 5.2) eine in Richtung der Fahrbahn weisende Nebenkeule aufweist.

24. Auslösevorrichtung nach einem oder mehreren der Ansprüche 20 oder 21,
**dadurch gekennzeichnet,**
daß der Systemtest innerhalb der die Objekterfassung (5) durchgeführt wird, welcher die Eigengeschwindigkeit (vₑ) eingespeist wird, wobei die Objekterfassung (5) mit dem Signalgenerator (8) eine Baugruppe bildet, insbesondere mit einem gemeinsamen Gehäuse.

25. Auslösevorrichtung nach Anspruch 20 oder 21,
**dadurch gekennzeichnet,**
daß wenn durch einen Systemtest eine Funktionsstörung der Objekterfassung (5) festgestellt wird, die Auslöseschwelle (AS) auf eine Standard-Auslöseschwelle (ASₛ) gesetzt wird.

26. Auslösevorrichtung nach Anspruch 3,
**dadurch gekennzeichnet,**
daß die Kollisionsparametererfassung (4) mit allen ihren Komponenten in eine Baugruppe mit dem Auslösesteuergerät (2), insbesondere mit einem gemeinsamen Gehäuse integriert ist.

27. Auslösevorrichtung nach Anspruch 1 oder 3,
**dadurch gekennzeichnet,**
daß das Kollisionsparametersignal (S) auch das Auslöseverhalten des Auslösesteuergerätes (2) beeinflußt.

28. Auslösevorrichtung nach Anspruch 27,
**dadurch gekennzeichnet,**
daß unter den Insassenrückhaltesystemen (3) ein Airbag mit mehrstufigem Gasgenerator vorgesehen ist, dessen Auslöseverhalten, insbesondere die Entscheidung ob ein- oder zweistufig gezündet wird und/oder die Auslösezeitpunkte zum Zünden der Gasgeneratoren, durch das Kollisionsparametersignal (S) beeinflußt ist.
